# EUROPÄISCHE PATENTSCHRIFT

(11) **EP 1 295 755 B1**
(45) Veröffentlichungstag und Bekanntmachung des Hinweises auf die Patenterteilung: **14.02.2007**
(21) Anmeldenummer: 01122382.3
(22) Anmeldetag: 19.09.2001
(51) Int. Cl.: B60Q 3/02

(54) **Leuchte für Fahrzeuge**
Vehicle lighting
Eclairage pour véhicule

(43) Veröffentlichungstag der Anmeldung: 26.03.2003
(73) Patentinhaber: Goodrich Corporation, Charlotte, North Carolina 28217-3022 (US)
(72) Erfinder: Schrewe, Elmar, 59609 Anröchte (DE)
(74) Vertreter: Hilleringmann, Jochen

(56) Entgegenhaltungen:
- EP-A- 0 512 380

## Beschreibung

Die Erfindung betrifft eine Leuchte für Fahrzeuge, insbesondere für Flugzeuge, mit einem Gehäuse, in dem eine Lichtquelle angeordnet ist, wobei ein erstes Gehäuseteil mit einem koaxial angeordneten zweiten Gehäuseteil lösbar verbunden ist.

Aus der EP 0 512 380 A2 ist eine Leuchte für Fahrzeuge mit einem eine Lichtquelle enthaltenden Gehäuse bekannt, das aus einem mit einer Tragplatte verbundenen ersten Gehäuseteil und einem lösbar mit demselben und koaxial angeordneten zweiten Gehäuseteil besteht. Zur Verbindung des ersten und zweiten Gehäuseteils ist eine Rasteinrichtung vorgesehen, die Rastelemente mit einer Mehrzahl von in axialer Richtung verteilt angeordneten Rastnasen bzw. Rastnocken aufweist. Dieser Verbindungsmechanismus von Gehäuseteilen, der sich grundsätzlich bewährt hat, hat jedoch den Nachteil, dass die Montage des Gehäuses von einer Vorderseite und einer Hinterseite einer Tragplatte an einer für die Leuchte vorgesehenen Öffnung der Tragplatte erfolgen muss. Es hat sich gezeigt, dass die Anbringung des ersten Gehäuseteils und des zweiten Gehäuseteils in unterschiedlicher Montagerichtung an der üblicherweise in vertikaler Richtung erstreckenden Tragplatte relativ zeitaufwendig ist. Ferner bedingt diese Montageart, dass stets ein Gehäuseteil von einer Vorderseite der Tragplatte vorspringend angeordnet sein muss. Dies ist aus optischen Gründen nicht immer erwünscht.

Aufgabe der vorliegenden Erfindung ist es daher, eine Leuchte für Fahrzeuge derart weiterzubilden, dass der Montageaufwand verringert wird.

Zur Lösung dieser Aufgabe ist die erfindungsgemäße Leuchte in Verbindung mit dem Oberbegriff des Patentanspruchs 1 dadurch gekennzeichnet, dass das erste Gehäuseteil und das zweite Gehäuseteil auf einer zueinandergekehrten Seite jeweils mindestens einen von einem Rand derselben in Axialrichtung abragenden Vorsprung aufweisen, der in eine korrespondierende Vertiefung des anderen Gehäuseteils eingreift, wobei die Vorsprünge jeweils eine in Querrichtung abragende Haltenase aufweisen zur Bildung einer Nut, in die ein Sicherungselement einsetzbar ist zur klemmenden Halterung des ersten Gehäuseteils relativ zu dem zweiten Gehäuseteil.

Der besondere Vorteil der Erfindung besteht darin, dass durch die Ausbildung von Vorsprüngen bzw. Vertiefung in Verbindung mit in Querrichtung abragenden Haltenasen eine einfache Verbindung des ersten und zweiten Gehäuseteils ermöglicht wird. Das erste und zweite Gehäuseteil sind formschlüssig miteinander verbunden, wobei die quer von den Vorsprüngen abragenden Haltenasen eine Begrenzungswand bilden und in Verbindung mit Teilabschnitten des Vorsprungs eine Nut bilden zur Aufnahme eines Sicherungselementes. Dieses Sicherungselement umgreift sowohl die Vorsprünge des ersten als auch des zweiten Gehäuseteils in der montierten Stellung, so dass eine sichere Verbindung gewährleistet ist. Die Montagesicherheit wird dadurch erhöht, dass der Monteur anhand der Lage des Sicherungselementes eindeutig den erwünschten Montagezustand erkennen kann.

Nach einer Weiterbildung der Erfindung weisen das erste und zweite Gehäuseteil jeweils eine Mehrzahl von im Umfangsrichtung verteilt angeordneten Vorsprüngen auf, so dass die Ränder des ersten und zweiten Gehäuseteils in der Montagestellung klauenartig ineinandergreifen. Vorteilhaft wird auf diese Weise das lagerichtige Zusammensetzen des ersten und zweiten Gehäuseteils vereinfacht.

Nach einer bevorzugten Ausführungsform der Erfindung ist der lichte Abstand zwischen den versetzt angeordneten Haltenasen in axialer Richtung der Gehäuseteile an den Durchmesser des Sicherungselementes angepasst, so dass stets eine die Klapperfreiheit gewährleistende das erste und zweite Gehäuseteil zusammendrückende Anpresskraft in axialer Richtung angreift.

Nach einer Weiterbildung der Erfindung weisen die Haltenasen auf einer dem Sicherungselement zugewandten Seite eine Schrägfläche auf, so dass sich die Nut in Richtung des Vorsprungs verjüngt. Auf diese Weise wird auch bei Toleranzabweichungen des Sicherungselementes eine sichere Verklemmung des ersten und zweiten Gehäuseteils ermöglicht, wobei durch die auf den Durchmesser des Sicherungselementes angepasste Länge der Schrägfläche ein eindeutiger Sitz des Sicherungselementes in der Nut gewährleistet ist.

Ein Ausführungsbeispiel der Erfindung wird nachfolgend anhand der Zeichnungen näher erläutert.

Es zeigen:
- Figur 1: eine Seitenansicht einer Leuchte,
- Figur 2: eine perspektivische Darstellung der Leuchte,
- Figur 3: eine perspektivische Darstellung eines zweiten Gehäuseteils eines Gehäuses der Leuchte,
- Figur 4: einen Schnitt durch einen Vorsprung V des zweiten Gehäuseteils gemäß Figur 3,
- Figur 5: einen perspektivische Darstellung eines ersten Gehäuseteils des Gehäuses und
- Figur 6: eine perspektivische Darstellung einer Tragplatte von einer Rückseite her, wobei auf der Tragplatte die Gehäuse von zwei Leuchten montiert sind.

Die Leuchte findet in Fahrzeugen, vorzugsweise in Flugzeugen, Anwendung, in der sie als Leseleuchte verwendet werden kann.

Eine Leuchte 1 weist ein Gehäuse 2 auf, das im Wesentlichen aus einem an einer Rückseite 3 einer Tragplatte 4 des Flugzeuges kraftschlüssig verbundenen ersten Gehäuseteil 5 einerseits und einem formschlüssig mit demselben verbundenen zweiten Gehäuseteil 6 besteht. Das erste und zweite Gehäuseteil 5, 6 sind im Wesentlichen hohlzylinderförmig bzw. kalottenförmig ausgebildet. Das zweite Gehäuseteil 6 weist auf einer dem ersten Gehäuseteil 5 abgewandten Seite eine Öffnung auf, so dass auf das zweite Gehäuseteil 6 ein drittes Gehäuseteil 7 aufgesetzt werden kann. Das dritte Gehäuseteil 7 weist eine zentral angeordnete Lichtquelle auf und ist auf einer dem zweiten Gehäuseteil 6 abgewandten Seite mit einer aus einer Mehrzahl von sternförmig angeordneten Kühlrippen 8 bestehenden Kühleinrichtung 9 zur Kühlung der Lichtquelle versehen. Die Lichtquelle kann als eine Glühlampe oder als eine Leuchtdiode ausgebildet sein. Das dritte Gehäuseteil 7 kann lagefest oder verschwenkbar zu dem zweiten Gehäuseteil 6 ausgerichtet sein.

Das erste und zweite Gehäuseteil 5, 6 sind in einem zusammengesetzten Zustand koaxial zueinander angeordnet und weisen jeweils auf einer zueinandergekehrten Seite einen Rand 10 bzw. 11 mit einer Verzahnung auf. Die Verzahnung wird gebildet durch eine Mehrzahl von in Axialrichtung abragenden Vorsprüngen 12 des ersten Gehäuseteils 5 bzw. Vorsprüngen 13 des zweiten Gehäuseteils 6. Die Vorsprünge 12, 13 weisen jeweils an einem freien Ende eine in Querrichtung radial nach außen weisende Haltenase 14 bzw. 15 auf. Der Rand 10, 11 des ersten bzw. zweiten Gehäuseteils 5, 6 ist kreisförmig ausgebildet.

In der Montagestellung sind die Haltenasen 14, 15 der Vorsprünge 12 bzw. 13 in Umfangsrichtung der Gehäuseteile 5, 6 versetzt zueinander angeordnet und bilden eine Ringnut 16 zur Aufnahme eines als Klemmring ausgebildeten Sicherungselementes.

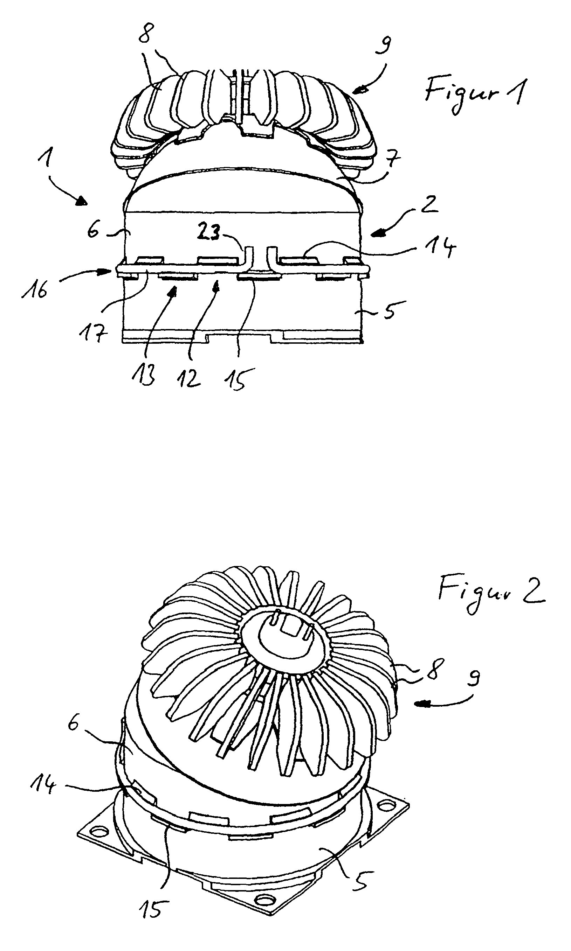

Wie aus Figur 1 zu ersehen ist, ist der lichte Abstand der versetzt zueinander angeordneten Haltenasen 14, 15 in axialer Richtung derart bemessen, das der Klemmring 17 klemmend auf einer Basisseite 18 der Ringnut 16 aufliegt.

Damit ein sicherer Sitz des Klemmrings 17 in der Nut 16 gewährleistet ist, sind die Haltenasen 14, 15 hakenförmig ausgebildet mit einer auf einer dem Sicherungsring 17 zugewandten Seite angeordneten Schrägfläche 19. Die Schrägfläche 19 ist derart orientiert, dass sich die Nut 16 in Montagerichtung des Klemmrings 17 verjüngt. Die Schrägfläche 19 bildet zu einer Querebene der Gehäuseteile 5, 6 einen spitzen Winkel. Durch diese wannenförmige Ausbildung der Ringnut 16 können Toleranzunterschiede zu dem Klemmring 17 ausgeglichen werden. Da der Klemmring 17 derart ausgebildet ist, dass er bei Einsetzen bzw. Lagerung in der Ringnut 16 in radialer Richtung nach innen klemmend wirkt, werden die Haltenasen 14 des ersten Gehäuseteils 5 zu den Haltenasen 15 des zweiten Gehäuseteils 6 gespreizt, so dass ein klapperfreier Sitz der beiden Gehäuseteile 5, 6 gewährleistet ist.

Die Breite der Basisseite 18 kann kleiner ausgebildet sein als der Durchmesser des Klemmrings 17. Dabei wird in Kauf genommen, dass der Klemmring 17 nicht auf der Basisseite 18 aufliegt. Wesentlich ist, dass die Länge der Haltenasen 14, 15 auf den Durchmesser des Klemmrings 17 abgestimmt ist. Die Länge der Haltenasen 14, 15 bzw. die Schrägflächen 19 derselben soll größer sein als der Radius des Klemmrings 17.

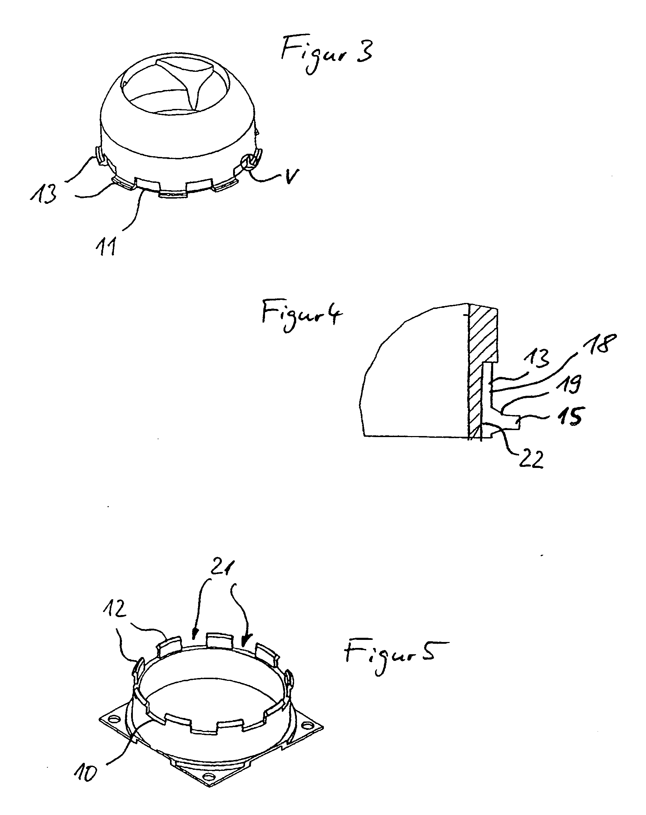

Wie aus Figur 5 ersichtlich ist, sind zwischen den Vorsprüngen 12 des ersten Gehäuseteils 5 Vertiefungen als Ausnehmungen 21 ausgebildet. Wie aus Figur 3 ersichtlich ist, sind die Vertiefungen des zweiten Gehäuseteils 6 als dünnwandige Aufnahmen 22 ausgebildet, die eine wesentlich dünnere Wandstärke haben als die Vorsprünge 13. Die Aufnahmen 22 sind auf einer Innenseite bündig zu Innenseiten benachbarter Vorsprünge 13 angeordnet.

Zur Montage des ersten und zweiten Gehäuseteils 5, 6 legen sich die Vorsprünge 12 des ersten Gehäuseteils 5 mit ihrer Innenseite auf die dünnwandigen Aufnahmen des zweiten Gehäuseteils 6 an. Die Vorsprünge 12, 13 der Gehäuseteile 5 und 6 greifen dabei klauenartig ineinander, wobei die Gehäuseteile 5, 6 bereits ihre Endstellung einnehmen. Die Breite der Vorsprünge 12, 13 bzw. der Vertiefungen 21, 22 kann in einem Bereich von 0,5 und 1,5 cm liegen. Alternativ ist es auch möglich, dass jedes Gehäuseteil 5, 6 über lediglich einen einzigen Vorsprung und eine einzige Vertiefung verfügt. Dabei würde der Vorsprung einen Winkel von 180° des Randes 10, 11 überstreichen.

Zur weiteren Montage der Leuchte 1 wird nach Zusammensetzen des ersten und zweiten Gehäuseteils 5, 6 der Klemmring 17 in die Ringnut 16 eingesetzt. Der Klemmring 17 weist hakenförmige Enden 23 auf, so dass der Klemmring 17 ohne Zuhilfenahme von Werkzeug in die vorgesehene Position gebracht werden kann.

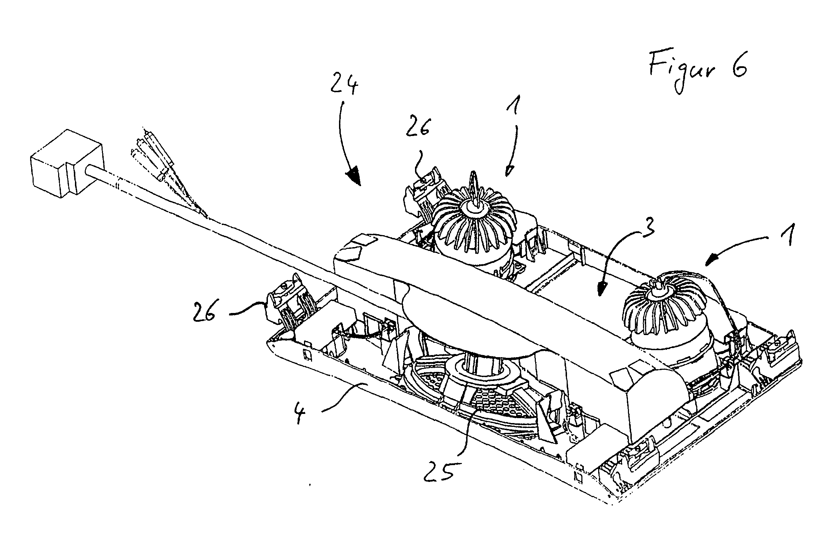

Das dritte Gehäuseteil 7 ist vorzugsweise an dem zweiten Gehäuseteil 6 vormontiert, so dass bei einem Austausch der Lichtquelle lediglich das zweite Gehäuseteil 6 durch Abnahme des Klemmrings 17 von dem ersten Gehäuseteil 5 entriegelt werden muss. Wie aus Figur 6 deutlich wird, ist das erste Gehäuseteil 5 durch Verschraubung fest mit der Tragplatte 4 einer Lichtbasiseinheit 24 verbunden. Die Tragplatte 4 weist in einem Längsabschnitt zwei gegenüberliegende Leuchten 1 und in einem benachbarten Längsabschnitt einen Lautsprecher 25 auf. Die Lichtbasiseinheit 24 ist über randseitige Befestigungsmittel 26 an einem nicht dargestellten Träger verschwenkbar angeordnet.

Zur Montage der Leuchten 1 bzw. zum Austausch von Lichtquellen derselben wird die Tragplatte 4 in eine vertikale Lage verbracht. Nachfolgend kann das erste Gehäuseteil 5 an der Rückseite 3 der Tragplatte 4 montiert werden. In einem weiteren Arbeitsschritt wird dann das zweite Gehäuseteil 6 auf das erste Gehäuseteil 5 aufgesetzt und unter Einsetzen des Klemmrings 17 in die Ringnut 16 mit dem ersten Gehäuseteil 5 verriegelt. Vorteilhaft ist das erste Gehäuseteil 5 bereits vormontiert auf der Tragplatte 4 angeordnet. Zum Wechseln der Lichtquelle braucht lediglich das zweite Gehäuseteil 6 von dem ersten Gehäuseteil 5 durch Entnahme des Klemmrings 17 entriegelt werden.

## Patentansprüche

1. Leuchte für Fahrzeuge, insbesondere für Flugzeuge, mit einem Gehäuse, in dem eine Lichtquelle angeordnet ist, wobei ein erstes Gehäuseteil mit einem koaxial angeordneten zweiten Gehäuseteil lösbar verbunden ist, **dadurch gekennzeichnet, dass** das erste Gehäuseteil (5) und das zweite Gehäuseteil (6) auf einer zueinandergekehrten Seite jeweils mindestens einen von einem Rand (10, 11) derselben in Axialrichtung abragenden Vorsprung (12, 13) aufweisen, der in eine korrespondierende Vertiefung (21, 22) des anderen Gehäuseteils (5, 6) eingreift, wobei die Vorsprünge (12, 13) jeweils eine in Querrichtung abragende Haltenase (14, 15) aufweisen zur Bildung einer Nut (16), in die ein Sicherungselement (17) einsetzbar ist zur klemmenden Halterung des ersten Gehäuseteils (5) relativ zu dem zweiten Gehäuseteil (6).

2. Leuchte nach Anspruch 1, **dadurch gekennzeichnet, dass** das erste Gehäuseteil (5) und das zweite Gehäuseteil (6) jeweils eine Mehrzahl von Vorsprüngen (12, 13) aufweisen, derart, dass die Ränder (10, 11) des ersten Gehäuseteils (5) und des zweiten Gehäuseteils (6) klauenartig ineinandergreifen.

3. Leuchte nach Anspruch 1 oder 2, **dadurch gekennzeichnet, dass** die Vorsprünge (12, 13) des ersten Gehäuseteils (5) einerseits und des zweiten Gehäuseteils (6) andererseits im zusammengesetzten Zustand derselben in Umfangsrichtung versetzt zueinander angeordnet sind, wobei der lichte Axialabstand der Haltenasen (14, 15) des ersten Gehäuseteils (5) bzw. des zweiten Gehäuseteils (6) an den Durchmesser des Sicherungselementes (17) angepasst sind.

4. Leuchte nach einem der Ansprüche 1 bis 3, **dadurch gekennzeichnet, dass** die Breite der Vorsprünge (12, 13) in einem Bereich von 0,5 cm bis 1, 5 cm liegt.

5. Leuchte nach einem der Ansprüche 1 bis 4, **dadurch gekennzeichnet, dass** die Haltenase (14, 15) auf einer dem Sicherungselement (17) zugewandten Seite eine Schrägfläche (19) aufweist, derart, dass sich die Nut (16) in Montagerichtung des Sicherungselementes (17) verjüngt.

6. Leuchte nach Anspruch 5, **dadurch gekennzeichnet, dass** die Schrägfläche (19) zu einer Querebene des Gehäuseteils (5, 6) einen spitzen Winkel bildet und dass die Länge der Schrägfläche (19) größer ist als der Radius des Sicherungselementes (17).

7. Leuchte nach einem der Ansprüche 1 bis 6, **dadurch gekennzeichnet, dass** die Vertiefung zwischen zwei benachbarten Vorsprüngen (13) des ersten Gehäuseteils (5) und/oder des zweiten Gehäuseteils (6) als eine dünnwandige Aufnahme (22) ausgebildet ist, die sich bündig zu einer Innenseite des benachbarten Vorsprungs (13) erstreckt.

8. Leuchte nach einem der Ansprüche 1 bis 7, **dadurch gekennzeichnet, dass** das Sicherungselement (17) als ein Sicherungsring ausgebildet ist.

9. Leuchte nach einem der Ansprüche 1 bis 8, **dadurch gekennzeichnet, dass** die Haltenase (14, 15) an einem freien Ende des Vorsprungs (12, 13) angeordnet ist.

10. Leuchte nach einem der Ansprüche 1 bis 9, **dadurch gekennzeichnet, dass** das erste Gehäuseteil (5) fest mit einer Tragplatte (4) des Fahrzeugs verbunden ist.

## Claims

1. A lamp for vehicles, in particular for aircraft, having a housing in which is arranged a light source, said housing comprising a first housing part and a coaxial second housing part that are detachably joined together, wherein the first housing part (5) and the second housing part (6) each has at least one projection (12, 13) on mutually facing sides, said projection extending in an axial direction from an edge (10, 11) thereof, each projection engaging in a corresponding recess (21, 22) of the other housing part (5, 6), wherein each projection (12, 13) has a retaining nose (14, 15) protruding in a transverse direction to form a groove (16) into which a locking element (17) can be inserted for clampingly locking the first housing part (5) relative to the second housing part (6).

2. The lamp of claim 1, wherein the first housing part (5) and the second housing part (6) each has a plurality of projections (12, 13), so that the edges (10, 11) of the first and second housing parts (5, 6) are interengaging in a claw-like manner.

3. The lamp of claim 1 or 2, wherein the projections (12, 13) of the respective first and second housing parts (5, 6) are arranged to be relatively offset from one another in a peripheral direction in an assembled state of the housing parts, with an inside axial spacing between the retaining noses (14, 15) of the first and second housing parts (5, 6) being adapted to a diameter of the locking element (17).

4. The lamp of one of claims 1 to 3, wherein widths of the projections (12, 13) are in a range of from 0.5 cm to 1.5 cm.

5. The lamp of one of claims 1 to 4 , wherein each of the retaining noses (14, 15) has an inclined surface (19) on a side facing the locking element (17) such that the groove (16) tapers inwardly in a direction of assembly of the locking element (17).

6. The lamp of claim 5, wherein each inclined surface (19) forms an acute angle with a perpendicular plane of the housing part (5, 6), with a length of the inclined surface (19) being greater than a radius of the locking element (17).

7. The lamp of one of claims 1 to 6, wherein the recess between two adjacent projections (13) of one of the first housing part (5) and the second housing part (6) is structured as a thin-walled seat (22) which extends flush with an inside of the adjacent projection (13).

8. The lamp of one of claims 1 to 7, wherein the locking element (17) is configured as a locking ring.

9. The lamp of one of claims 1 to 8, wherein each retaining nose (14, 15) is arranged on a free end of a projection (12, 13).

10. The lamp of one of claims 1 to 9, wherein the first housing part (5) is fixedly connected to a support plate (4) of the vehicle.

## Revendications

1. Eclairage pour véhicules, en particulier pour avions, comprenant un boîtier dans lequel une source de lumière est disposée, un premier élément de boîtier étant relié, d'une façon détachable, à un deuxième élément de boîtier positionné coaxialement, **caractérisé en ce que** le premier élément de boîtier (5) et le deuxième élément de boîtier (6) présentent chacun, sur des faces respectives tournées l'une vers l'autre, au moins une saillie (12, 13) qui se dresse d'un bord (10, 11) de ces dernières, en direction axiale, et qui s'engage dans un évidement correspondant (21, 22) de l'autre élément de boîtier (5, 6), les saillies (12, 13) présentant chacune un bec de retenue (14, 15) s'avançant en direction transversale, afin de former une gorge (16), dans laquelle un élément de sécurité (17) peut être inséré pour la fixation bloquante du premier élément de boîtier (5) par rapport au deuxième élément de boîtier (6).

2. Eclairage selon la revendication 1, **caractérisé en ce que** le premier élément de boîtier (5) et le deuxième élément de boîtier (6) présentent chacun une multiplicité de saillies (12, 13), de telle manière que les bords (10, 11) du premier élément de boîtier (5) et du deuxième élément de boîtier (6) s'imbriquent l'un dans l'autre à la manière de griffes.

3. Eclairage selon la revendication 1 ou 2, **caractérisé en ce que** les saillies (12, 13) du premier élément de boîtier (5), d'une part, et du deuxième élément de boîtier (6), d'autre part, sont, dans l'état assemblé de ces derniers, positionnées suivant un décalage mutuel dans la direction périphérique, l'écartement axial libre des becs de retenue (14, 15) du premier élément de boîtier (5) et du deuxième élément de boîtier (6) étant alors adapté au diamètre de l'élément de sécurité (17).

4. Eclairage selon l'une des revendications 1 à 3, **caractérisé en ce que** la largeur des saillies (12, 13) se situe dans une plage de 0,5 cm à 1,5 cm.

5. Eclairage selon l'une des revendications 1 à 4, **caractérisé en ce que** le bec de retenue (14, 15) présente, sur une face tournée vers l'élément de sécurité (17), une surface en chanfrein (19), de telle manière que la gorge (16) se rétrécisse dans la direction de montage de l'élément de sécurité (17).

6. Eclairage selon la revendication 5, **caractérisé en ce que** la surface en chanfrein (19) forme un angle aigu par rapport à un plan transversal de l'élément de boîtier (5, 6) et **en ce que** la longueur de la surface en chanfrein (19) est plus grande que le rayon de l'élément de sécurité (17).

7. Eclairage selon l'une des revendications 1 à 6, **caractérisé en ce que** l'évidement entre deux saillies voisines (13) du premier élément de boîtier (5) et/ou du deuxième élément de boîtier (6), est réalisé sous forme d'un logement à paroi mince (22), qui s'étend au ras d'une face intérieure de la saillie voisine (13).

8. Eclairage selon l'une des revendications 1 à 7, **caractérisé en ce que** l'élément de sécurité (17) est réalisé sous forme d'un anneau de sécurité.

9. Eclairage selon l'une des revendications 1 à 8, **caractérisé en ce que** le bec de retenue (14, 15) est disposé à une extrémité libre de la saillie (12, 13).

10. Eclairage selon l'une des revendications 1 à 9, **caractérisé en ce que** le premier élément de boîtier (5) est solidarisé à une plaque de support (4) du véhicule.
